(19) Europäisches Patentamt
European Patent Office
Office européen des brevets

(11) **EP 3 470 570 B1**

(12) **EUROPÄISCHE PATENTSCHRIFT**

(45) Veröffentlichungstag und Bekanntmachung des Hinweises auf die Patenterteilung:
**10.04.2024   Patentblatt 2024/15**

(21) Anmeldenummer: **18194706.0**

(22) Anmeldetag: **17.09.2018**

(51) Internationale Patentklassifikation (IPC):
*D06F 58/24* <sup>(2006.01)</sup>     *F16K 11/052* <sup>(2006.01)</sup>
*F16K 31/04* <sup>(2006.01)</sup>     *F16K 31/528* <sup>(2006.01)</sup>
*F16K 31/54* <sup>(2006.01)</sup>

(52) Gemeinsame Patentklassifikation (CPC):
**D06F 58/24; F16K 11/0525; F16K 31/047;
F16K 31/5282; F16K 31/54**

(54) **VENTILVORRICHTUNG ZUM LEITEN EINES KONDENSATS EINES WÄSCHEPFLEGEGERÄTES**

VALVE DEVICE FOR GUIDING A CONDENSATE OF A LAUNDRY CARE DEVICE

DISPOSITIF DE SOUPAPE DESTINÉ À GUIDER UN CONDENSAT D'UN APPAREIL DE TRAITEMENT DU LINGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2017   DE 102017218353**

(43) Veröffentlichungstag der Anmeldung:
**17.04.2019   Patentblatt 2019/16**

(73) Patentinhaber: **BSH Hausgeräte GmbH
81739 München (DE)**

(72) Erfinder:
• **Hennig, Holger
  12249 Berlin (DE)**
• **Bömmels, Ralf
  14612 Falkensee (DE)**
• **Despang, Oliver
  15712 Königs Wusterhausen (DE)**

(56) Entgegenhaltungen:
EP-A1- 0 054 448      CN-A- 106 480 683
DE-A1- 2 702 639      DE-A1-102005 051 304
DE-A1-102008 032 800      FR-A2- 2 443 231

**Beschreibung**

Die vorliegende Erfindung betrifft eine Ventilvorrichtung zum Leiten eines Kondensats eines Wäschepflegegeräts, insbesondere entlang eines ausgewählten Weges. Ferner betrifft die vorliegende Erfindung ein Wäschepflegegerät, insbesondere einen Trockner oder einen Waschtrockner, mit einer Ventilvorrichtung sowie ein Verfahren zum Leiten eines Kondensats eines Wäschepflegegeräts.

Bauartabhängig wird bei Wäschepflegegeräten, wie beispielsweise Wärmepumpentrocknern, das beim Trocknungsprozess anfallende Kondensat aufgefangen, um dieses verschiedenen Reinigungsvorgängen von verschiedenen Bauteilen des Wäschepflegegeräts zuzuführen, wobei diese Reinigungsvorgänge miteinander kombiniert sein können, oder um das Kondensat aus dem Wäschepflegegerät oder in einen Kondensatbehälter zu leiten. Die Reinigungsvorgänge betreffen beispielsweise ein Reinigen von Wärmetauschern oder das Reinigen eines Prozessluft-Flusensiebs.

Ein Verteilen einer Flüssigkeit in einem Haushaltsgerät an mindestens zwei Bauteile ist beispielsweise aus der DE 10 2013 217 468 A1 bekannt. Diesem Dokument gemäß ist eine Flüssigkeitsweiche offenbart, welche Austrittsöffnungen aufweist, durch welche die Flüssigkeit zu einer Gruppe von Bauteilen, aber nicht zu einzelnen Bauteilen, strömen kann. Die Austrittsöffnungen können mittels eines flexiblen Dichtelements verschlossen oder geöffnet werden.

CN 106 480 683 A beschreibt einen Trockner mit einem Wasserbehälter, einer Bodengruppe, einem zu reinigenden Bauteil, einer Pumpe und einer Ventilvorrichtung. Die Ventilvorrichtung kann dazu eingesetzt werden, einen Pumpenausgang mit dem Wasserbehälter oder mit dem zu reinigenden Bauteil wasserleitend zu verbinden. Die Ventilvorrichtung kann über einen linearen Stellantrieb mit einer über den Stellweg konstanten Kraftentfaltung in einer ersten oder einer zweiten Schaltstellung eingestellt werden. Weiterer Stand der Technik ist aus DE 10 2005 051304 A1 und DE 27 02 639 A1 bekannt. In der EP 0 054 448 A1 ist eine Wasserabgabevorrichtung für einen Geschirrspüler mit einem Schwenkventil offenbart. Das Schwenkventil weist einen Hebel auf, welcher ein Langloch aufweist und von einer Steuerstange ausgelenkt wird. FR 2 443 231 A2 beschreibt ein Spülsystem für einen Geschirrspüler, bei dem eine Ventilanordnung eine kontinuierliche Umschaltung eines Wasserstroms einer Umwälzpumpe zwischen zwei Ausgangsleitungen bewirkt.

Eine Kombinierbarkeit der einzelnen Spülvorgänge macht es notwendig, das Kondensat zur Reinigung des jeweiligen Bauteils selektiv leiten zu können. In diesem Zusammenhang ist es bekannt, mehrere Ventile vorzusehen, um einen einzigen Reinigungsweg zu einem Bauteil zu aktivieren, wobei die Ventile mit einer konstanten Stellgeschwindigkeit und einer konstanten Stellkraft arbeiten. Dies bedeutet allerdings, dass eine Anpassung an stellwegabhängige Erfordernisse nicht stattfindet. Hierdurch kann eine Aktivierung der einzelnen Reinigungswege, insbesondere nacheinander, zu einem langandauernden Prozessablauf führen.

Weder ein gruppenabhängiges Reinigen von Bauteilen, noch ein selektives Reinigen von Bauteilen, welches einen langandauernden Prozessablauf nach sich zieht, sind stets befriedigende Prozessabläufe. Ferner kann es gewünscht sein, das angesammelte Kondensat zumindest teilweise aus dem Wäschepflegegerät heraus zu leiten.

Angesichts dieser Probleme im Stand der Technik ist die Aufgabe der vorliegenden Erfindung, eine Ventilvorrichtung bereit zu stellen, mit welcher schnell und selektiv verschiedene Prozessabläufe zur Reinigung verschiedener Bauteile und/oder zur Ableitung des Kondensats aus dem Wäschepflegegerät durchgeführt werden können. Diese Aufgaben werden gelöst mit einer Ventilvorrichtung, einem Wäschepflegegerät sowie einem Verfahren zum Leiten eines Kondensats eines Wäschepflegegeräts gemäß jeweiligem unabhängigem Patentanspruch. Weitere Vorteile und fakultative Merkmale der vorliegenden Erfindung ergeben sich aus den abhängigen Patentansprüchen, der nachfolgenden Beschreibung und der beigefügten Zeichnung. Solche fakultativen Merkmale sind in Rahmen des technisch Sinnvollen auch übertragbar zwischen den genannten Kategorien, in denen sich die vorliegende Erfindung ausprägt, und untereinander kombinierbar. Dies gilt auch dann, wenn es ansonsten hierin nicht explizit festgestellt ist.

Erfindungsgemäß wird demnach eine Ventilvorrichtung zum Leiten eines Kondensats eines Wäschepflegegeräts, insbesondere entlang eines ausgewählten Weges vorgeschlagen, wobei die Ventilvorrichtung einen Zulauf zum Aufnehmen des Kondensats und mindestens einen Ablauf zum Ableiten des Kondensats, insbesondere an ein zu reinigendes Bauteil aufweist. Der mindestens eine Ablauf weist mindestens ein Ventil mit einer bewegbaren Klappe auf, wobei die Klappe mit einem Hebelarm verbunden ist. Auf den Hebelarm ist über einen Kraftangriffspunkt an dem Hebelarm eine Kraft übertragbar ist, welche über einen Drehpunkt einer Drehachse auf die Klappe übertragbar ist, so dass die Klappe zwischen einem geöffneten und einem geschlossenen Zustand des mindestens einen Ablaufes bewegbar ist, wobei das Ventil über einen Ventilantrieb ansteuerbar ist. Dabei ist ein Abstand zwischen dem Kraftangriffspunkt und dem Drehpunkt veränderbar, so dass eine Anpresskraft und/oder eine Stellgeschwindigkeit der Klappe, insbesondere auf eine Ablauföffnung des mindestens einen Ablaufes, veränderbar ist. Der Ventilantrieb ist als ein linearer Aktor ausgestaltet, welcher, insbesondere über ein Gelenk (53), mit einem Stellelement verbunden ist. Das Stellelement überträgt am Kraftangriffspunkt die Kraft und Bewegung des Aktors auf den Hebelarm, wobei das Stellelement an einem entlang des Hebelarmes verschiebbaren Kraftangriffspunkt eingreift. Weiterhin ist eine Führung vorgesehen, welche durch ein Eingreifen des Stellelementes an dem Hebelarm entlang einem am Hebelarm festgelegten Lager ausgebildet ist.

Die Erfindung sieht damit vor, eine Stellkraft und/oder eine Stellgeschwindigkeit des mindestens einen Ventils den stellwegabhängigen Erfordernissen anzupassen. Dies geschieht, wie vorgeschlagen, durch einen variabel einstellbaren Abstand zwischen dem Kraftangriffspunkt des Hebelarmes und dem Drehpunkt der Drehachse. Hierbei ist der Drehpunkt vorzugsweise fest vorgegeben, während der Kraftangriffspunkt in Relation zu dem Drehpunkt verschiebbar, d.h. variabel, ist. Es ist jedoch auch denkbar, den Drehpunkt an vorgegebene Positionen zu verschieben und jeweils an einer fest vorgegebenen Position festzulegen. Die vorgeschlagene Übertragung einer Kraft bzw. einer Bewegung auf den Kraftangriffspunkt des Hebelarmes erfolgt beispielsweise durch eine Aktivierung eines Ventilantriebes. Ein solcher Ventilantrieb bewirkt eine Bewegung eines Stellelementes, welches wiederum an dem Kraftangriffspunkt des Hebelarmes angreift. Durch die vorgeschlagene Kaskade an Kraftübertragungen von dem Hebelarm, insbesondere von dem Stellelement über den Hebelarm, auf die Klappe des Ventils, welches beispielsweise durch den Ventilantrieb ausgelöst wird, wird erreicht, dass mit zunehmender Entfernung des Kraftangriffspunkt $k_1$ vom Drehpunkt e die Kraft an einer Kante der Klappe steigt, während die Stellgeschwindigkeit dort abnimmt. Mit zunehmender Annäherung des Kraftangriffspunktes an den Drehpunkt hingegen steigt die Stellgeschwindigkeit an der Kannte der Klappe, während die Kraft dort geringer wird. Dieser Zusammenhang zwischen Kräften und Abständen von einem Hebel zu einem Drehpunkt bei einer senkrechten Krafteinwirkung wird durch die Gleichung

$$F_2 = r_1/r_2 * F_1 \qquad (1)$$

beschrieben. Der Zusammenhang zwischen dem Abstand zu dem Drehpunkt e und den Stellgeschwindigkeiten wird durch die Gleichung

$$v_2 = r_2/r_1 * v_1 \qquad (2)$$

beschrieben, wobei $F_1$ eine Kraft eines Stellelementes bezeichnet, von dem die Kraft $F_1$ auf den Kraftangriffspunkt übertragen wird, $F_2$ eine Kraft an einer Kante der Klappe bezeichnet, $r_1$ den Abstand zwischen dem Kraftangriffspunkt des Stellelementes von der Drehachse angibt, $r_2$ den Abstand zwischen der Kante der Klappe und der Drehachse angibt, $v_1$ die Geschwindigkeit an dem Kraftangriffspunkt und $v_2$ die Geschwindigkeit der Kante der Klappe.

Für ein sicheres Erreichen einer Endposition der Klappe wird diese mit einer größeren Kraft in einen Ventilsitz, d.h. in einen Dichtsitz gedrückt. Dazu wird der Kraftangriffspunkt $k_i$ in einen vergleichsweise großen Abstand zu dem Drehpunkt verschoben. Dies wird durch die Veränderung des Abstandes zwischen dem Kraftangriffspunkt und dem Drehpunkt erreicht. Hierdurch wird eine Anpassung der Stellgeschwindigkeit und/oder der Stellkraft, also eine Anpassung an stellwegabhängige Erfordernisse, in der Ventilvorrichtung erzielt.

Die vorgeschlagene Ventilvorrichtung kann in einem Wäschepflegegerät zum Durchführen von Reinigungsvorgänge verschiedener Bauteile in dem Wäschepflegegerät, oder zum Leiten des Kondensats von einer Bodengruppe in einen Kondensatbehälter, oder zum Herausleiten des Kondensats aus der Bodengruppe oder aus dem Kondensatbehälter in eine externe Leitung oder einen externen Behälter verwendet werden.

Bevorzugt ist die Drehachse an einem Gehäuse des mindestens einen Ventils festgelegt. Das Gehäuse der Ventilvorrichtung umfasst Wandungen für den Zulauf und Wandungen für mindestens einen Ablauf. Besonders bevorzugt umfasst das Gehäuse Wandungen für zwei Abläufe, welche von dem Ventil wahlweise verschlossen werden können. Bevorzugt ist das Ventil bei einer Ausführungsform mit zwei Abläufen an einem Übergangsbereich des Gehäuses zwischen den zwei Abläufen, d.h. zwischen den Wandungen der zwei Abläufe festgelegt. Es ist denkbar, einen solchen Übergangsbereich rundlich auszugestalten, so dass zu dem Übergangsbereich ein komplementärer Drehachsenabschnitt an dem Hebelarm vorgesehen ist. Die Drehachse erstreckt sich senkrecht durch den Drehachsenabschnitt an dem Hebelarm, insbesondere kann bewegt sich die Drehachse als solche, insbesondere in einem festen Abstand zu einem Endbereich der Klappe, mit der Klappe entlang eines Außenumfangs des Übergangsbereiches. Der Drehachsenabschnitt ist somit beweglich an dem Übergangsbereich gelagert.

Der Aktor umfasst bevorzugt einen motorgesteuerten Antrieb, mit welchem das Stellelement in Bewegung versetzt werden kann, so dass das Stellelement eine Kraft und eine Bewegung auf den Kraftangriffspunkt übertragen kann. Der Aktor kann über ein Gelenk oder direkt mit dem Stellelement verbunden sein. Es ist ferner denkbar, dass Stellelement durch eine mechanische oder magneto-mechanische, oder thermo-mechanische Vorrichtung (=Aktor) in Bewegung zu versetzen.

Das Eingreifen des Stellelementes an dem Hebelarm mittels des Kraftangriffspunktes ist derart zu verstehen, dass durch das Verschieben des Stellelementes entlang des Hebelarms der Abstand des Kraftangriffspunktes zu dem in seiner Position festgelegten Drehpunkt vergrößerbar oder verkleinerbar ist.

Weiterhin ist eine Führung vorgesehen, welche insbesondere durch ein Eingreifen des Stellelementes an dem Hebelarm entlang einem am Hebelarm festgelegten Lager ausgebildet ist. Als Lager bezeichnet man im Allgemeinen ein Element, insbesondere ein Maschinenelement, zum Führen gegeneinander beweglicher Bauteile. Die Führung entspricht vorliegend einem Zusammenwirken des Lagers, welches am Hebelarm angeordnet ist und derart ausgebildet ist, dass das Stellelement an dem Lager eingreifen kann bzw. von dem Lager geführt werden kann, um die Kraft bzw. die Bewegung des Stellelements auf den Hebelarm zu übertragen. Durch die Führung wird sichergestellt, dass der Abstand zwischen dem Drehpunkt und dem Kraftangriffspunkt entlang eines vorgegebenen Weges veränderbar ist.

Das Lager ist an dem Hebelarm als eine Durchgangsöffnung oder eine Nut ausgebildet, in welcher ein Stift des Stellelementes geführt ist, wobei insbesondere der Stift in ein Führungselement eingreift, welches zusätzlich durch seine Form die Bewegung in der Führung unterstützt. Die Durchgangsöffnung oder die Nut ist bevorzugt als Langloch ausgebildet. Ein Langloch bezeichnet in der Technik allgemein eine längliche Bohrung oder eine längliche Nut. Gemäß dieser Ausführungsform greift der Stift des Stellelementes beispielsweise durch das Langloch in ein Führungselement ein, so dass der Hebelarm zwischen dem Führungselement und dem Stellelement angeordnet ist. Der Stift verbindet somit das Stellelement mit dem Führungselement. Das Führungselement weist eine Kontur auf, entlang derer das Stellelement, insbesondere durch die Durchgangsöffnung, bewegbar ist. Die Kontur des Führungselements, d.h. die Form des Führungselementes, führt somit die Bewegung des Stellelementes in der Führung und bestimmt somit den Abstand zwischen dem Kraftangriffspunkt und dem Drehpunkt.

Gemäß einer weiteren Ausführungsform ist die Führung durch ein, insbesondere nicht rundes, Zahnrad, welches als Hebelarm dient, und einem Stellelement, welche in das Zahnrad eingreift, ausgebildet. Bei dieser Ausführungsform dient der Umriss des Zahnrades als Hebelarm. Es ist daher denkbar ein nicht rundes Zahnrad beispielsweise in Form einer Eichel oder dergleichen auszubilden. Ferner könnte auch ein exzentrische Zahnrad, d.h. ein Exzenter, bei dieser Ausführungsform als Hebelarm dienen. Ein Exzenter ist im Maschinenbau eine auf einer Welle angebrachte Steuerungsscheibe, deren Mittelpunkt außerhalb der Wellenachse liegt. Vorliegend ist ein exzentrisches Zahnrad ein, insbesondere rundes, Zahnrad, dessen Drehachse außerhalb des Mittelpunktes angeordnet ist. Das Stellelement kann bei einer solchen Ausführungsform als eine Schubstange ausgebildet sein, welche zumindest teilweise einen komplementär ausgebildeten Umriss zu dem Zahnrad aufweist, so dass eine Kraft- bzw. Bewegungsübertragung erfolgen kann. Der zumindest teilweise komplementär ausgebildete Umriss umfasst beispielsweise Zähne, in welche das Zahnrad eingreift.

Bevorzugt resultiert eine Bewegung des Stellelements in eine Bewegung des Hebelarmes entlang der Führung, bei welcher sich insbesondere der Abstand zwischen dem Kraftangriffspunkt und dem Drehpunkt ändert. Bei beiden hierin beschriebenen Ausführungsformen gibt die Führung eine mögliche Abstandsänderung zwischen dem Kraftangriffspunkt und dem Drehpunkt durch ihre Form, insbesondere durch ihre Wechselwirkung mit dem Stellelement vor. Die Führung hat den Vorteil, dass das Stellelement und der Hebelarm miteinander beweglich zueinander verbunden sind.

Bevorzugt umfasst die Ventilvorrichtung ein oder mehrere Ventile, insbesondere 3-Wege-Ventile, um einen Weg zum Leiten des Kondensats wahlweise freizugeben oder zu versperren. Die Ventilvorrichtung kann beispielsweise mehrere 3-Wege-Ventile aufweisen, welche kaskadenartig in dem Wäschepflegegerät angeordnet sein. Jedes 3-Wege Ventil kann derart eingestellt werden, dass ein Weg als Zulauf dient und mindestens zwei Wege als Ablauf dienen, welche wahlweise geöffnet werden. Hierdurch kann also selektiv ein Weg in dem Wäschepflegegerät ausgewählt werden, um das Kondensat zu leiten, sei es zu einem Bauteil, oder von der Bodengruppe in den Kondensatbehälter, oder aus der Bodengruppe oder aus dem Kondensatbehälter hinaus aus dem Wäschepflegegerät.

Weiter bevorzugt weist jeder Ablauf der Ventilvorrichtung einen Dichtungssitz auf, um die Klappe, insbesondere eine Dichtung der Klappe, zu empfangen, wobei insbesondere die Dichtung der Klappe und des Dichtungssitzes derart ausgebildet sind, dass diese in dem geschlossenen Zustand form- und/oder kraftschlüssig ineinander oder aneinander greifen. Jede Klappe eines Ventils weist dabei einen Klappen-Grundkörper auf, an welchem mindestens eine Dichtung bevorzugt zwei Dichtungen angeordnet ist/sind. Die zwei Dichtungen einer Klappe können beispielsweise Dichtungssitze zwei verschiedener Abläufe wahlweise verschließen. Jeweils eines der zwei Abläufe kann von einem der zwei Dichtsitze des jeweiligen Ventils versperrt werden. Hierzu sind zwei Abläufe und das entsprechende Ventil derart in der Ventilvorrichtung angeordnet, dass durch eine Kraftübertrag von dem Stellelement an dem Hebelarm des Ventils das Ventil entweder auf den einen oder den anderen Ventilsitz bewegt wird. Ferner weist jeder Hebelarm eines Ventils einen Drehabschnitt auf, welcher an das Gehäuse der Ventilvorrichtung grenzt, wobei der Drehpunkt an oder in dem Drehabschnitt angeordnet ist. Senkrecht zu dem Drehabschnitt verläuft die fiktive Drehachse, um welche das Ventil verschwenkt werden kann.

Ein weiterer Aspekt der vorliegenden Erfindung betrifft ein Wäschepflegegerät, insbesondere einen Trockner oder einen Waschtrockner, mit einer hierin beschriebenen Ventilvorrichtung, wobei ein Kondensat des Wäschepflegegerätes mit der Ventilvorrichtung selektiv zu einer vorgegebenen Position leitbar ist. Es versteht sich, dass das Wäschepflegegerät eine hierin beschrieben Ausführungsform der Ventilvorrichtung umfasst, welches das selektive Leiten des Kondensats ermöglicht. Alle hierin beschriebenen Ausführungsformen und Vorteile der Ventilvorrichtung sind auf das Wäschepflegegerät, welches eine hierin beschriebene Ventilvorrichtung umfasst, direkt übertragbar und wird an dieser Stelle nicht nochmal wiederholt. Vielmehr wird auf das zuvor Beschriebene Bezug genommen.

Ein weiterer Aspekt der vorliegenden Erfindung betrifft ein Verfahren zum Leiten eines Kondensats eines Wäschepflegegeräts, insbesondere entlang eines ausgewählten Weges. Zum Ausführen des Verfahrens weist das Wäschepflegegerät eine hierin beschriebene Ventilvorrichtung mit mindestens einem Ventil auf, wobei das Ventil eine Klappe und einen Hebelarm aufweist, welches insbesondere über einen Ventilantrieb ansteuerbar ist, und dazu ausgebildet ist, mindestens einen Ablauf zu versperren, um ein Ableiten des Kondensats durch den Ablauf zu verhindern. Das Verfahren umfasst die Schritte:

- Bewegen eines Stellelementes entlang einer Richtung, um an einem Krafteinwirkungspunkt eine Kraft von dem Stellelement auf den Hebelarm zu übertragen,

- Verändern eines Abstandes zwischen dem Kraftangriffspunkt und einem Drehpunkt, welcher insbesondere an einem Drehabschnitt angeordnet ist, welcher zwischen dem Hebelarm und der Klappe angeordnet ist, wobei das Verändern des Abstandes durch die Bewegung des Stellelementes entlang einer Führung erfolgt, wodurch eine Stellgeschwindigkeit und/oder eine Stellkraft der Klappe des Ventils an ventilstellwegabhängigen Erfordernisse in der Ventilvorrichtung angepasst wird.

Bevorzugt ist der Drehpunkt des Hebelarmes an einer festen Position an dem Hebelarm gegeben. Das Verändern des Abstandes zwischen dem Krafteinwirkungspunkt des Stellelementes und dem Drehpunkt des Hebelarmes erfolgt folglich durch ein relatives Verschieben des Kraftangriffspunktes zu dem Drehpunkt. Dieses relative Verschieben ist durch die Führung vorgegeben. Das Verschieben als solches kann stufenweise oder kontinuierlich erfolgen.

Zum Erreichen einer Endposition des Ventils auf einem Ventilsitz wird der Abstand zwischen dem Kraftangriffspunkt und dem Drehpunkt durch die Bewegung entlang der Führung verringert. Eine Endposition entspricht vorliegend einem geschlossenen Zustand der Klappe auf einem Dichtsitz. Bevorzugt ist bei dem Verfahren eine Klappe zwischen zwei Dichtsitzen bewegbar, wobei der Weg zwischen den zwei Dichtsitzen im Vergleich zum Ansteuern eines der Dichtsitze schneller durchfahren wird, indem der Abstand zwischen dem Kraftangriffspunkt und dem Drehpunkt, insbesondere mittels der Führung, vergrößert wird. Der Weg zwischen den Endpositionen der Klappe soll vergleichsweise schnell durchfahren werden. Hierdurch kann ein Zeitintervall für ein Auftreten etwaiger Strömungsgeräusche wie beispielsweise durch Druckunterschiede zwischen den Ventilen kurz gehalten werden. Während einer Bewegung der Klappe von einem Dichtungssitz zu einem anderen Dichtungssitz wird der Kraftangriffspunkt mittels der Führung vergleichsweise nach innen verschoben und damit der Abstand zwischen des Kraftangriffspunkt zu dem Drehpunkt verringert/vergrößert. Hierdurch wird durch den veränderten Abstand des Kraftangriffspunktes zu dem Drehpunkt und damit zu der Drehachse in Abhängigkeit von der Stellposition der Klappe eine bedarfsgerechte Anpassung von Stellgeschwindigkeit und/oder Stellkraft bewirkt.

Ferner ist zur Ausführung des Verfahrens bevorzugt ein, insbesondere linearer, Aktor vorgesehen, welcher mit dem Ventilantrieb verbunden ist und von dem Ventilantrieb angesteuert werden kann, so dass das Stellelement entlang einer Richtung, insbesondere entlang einer Führung, bewegt werden kann, um eine Kraft an dem Kraftangriffspunkt zu übertragen, um eine Bewegung, insbesondere eine Schwenkung, des Hebelarmes auszuführen, so dass wiederum eine Kraftübertragung auf die Klappe erfolgt. Der Aktor kann insbesondere als ein Thermoaktor ausgebildet sein.

Vorteile der hierin beschriebenen Ventilvorrichtung, welche in dem hierin beschriebenen Wäschepflegegerät verbaut ist, um ein hierin beschriebenes Verfahren auszuführen, sind unter anderem darin zu sehen, dass durch den stellwegabhängig einstellbaren Abstand des Kraftangriffspunktes zu dem Drehpunkt sich sowohl eine Stellgeschwindigkeit als auch eine Stellkraft den Erfordernissen zur Bewegung einer Klappe und zum Festlegen dieser Klappe auf einen Ventilsitz angepasst werden können. Die Erfordernisse sind insbesondere abhängig von der Stellposition der Klappe. Ferner kann hierdurch die Sicherheit erhöht werden, dass die Klappe die Endposition durch eine größere Stellkraft bei geringerer Stellgeschwindigkeit erreicht. Bei einem Bewegen der Klappe von einem Dichtsitz zu dem anderen Dichtsitz, also einem Durchfahren zwischen zwei Klappenpositionen, bei dem eine strömungsbedingte Geräuschbildung auftreten kann, wird die Stellgeschwindigkeit erhöht und die Stellkraft verringert. Zudem ist von Vorteil, dass die hierin vorgeschlagene Lösung durch eine einfache mechanische Lösung ohne weitere Bauteile gegeben ist.

Weitere Vorteile und Merkmale der vorliegenden Erfindung ergeben sich aus der nachfolgenden Beschreibung bevorzugter Ausführungsformen mit Bezug auf die Figuren der beigefügten Zeichnung. Es versteht sich, dass einzelne in den jeweiligen Figuren gezeigte Ausführungsformen Merkmale aufweisen können, die auch in anderen Ausführungsformen zum Einsatz gelangen können, auch wenn dies nicht explizit genannt ist, und sofern dies nicht aufgrund technischer Gegebenheiten oder explizit ausgeschlossen wurde. Es zeigen:

Fig. 1     eine schematische Darstellung eines Wäschepflegegeräts mit einer vorgeschlagenen Ventilvorrichtung

Fig. 2     eine erste mögliche Ausführungsform der vorgeschlagenen Ventilvorrichtung,

Fig. 3     eine zweite mögliche Ausführungsform der vorgeschlagenen Ventilvorrichtung, und

Fig. 4 eine dritte mögliche Ausführungsform der vorgeschlagenen Ventilvorrichtung.

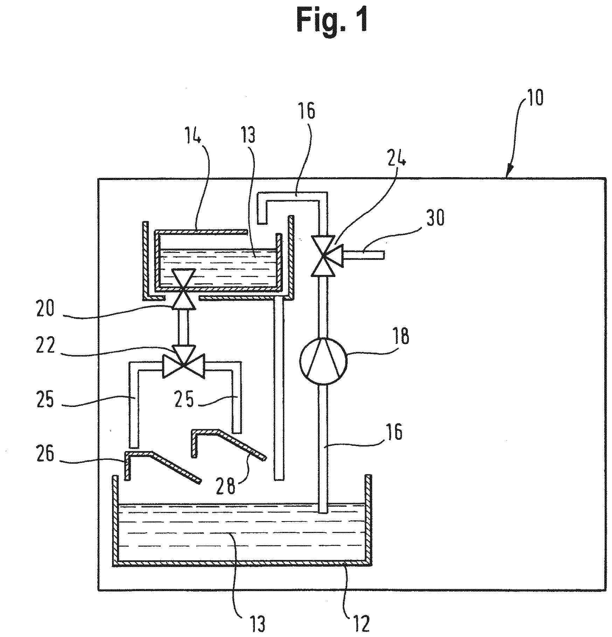

Figur 1 zeigt schematisch ein Wäschepflegegerät 10, in welchem beispielsweise mindestens zwei erfindungsgemäße Ventilvorrichtungen 22, 24 verbaut sind. Das Wäschepflegegerät 10 weist eine Bodengruppe 12 auf, in welcher Kondensat 13 aufgefangen wird, welches bei einem Trocknungsprozess einer Wäsche entzogen wurde. Aus der Bodengruppe 12 wird das aufgefangene Kondensat 13 mittels einer Pumpe 18 über eine Ablaufleitung 16 in einen Kondensatbehälter 14 geleitet bzw. gepumpt. Es ist ferner möglich, dass das Kondensat 13 direkt aus der Bodengruppe 12 oder aus dem Kondensatbehälter 14 über die Ablaufleitung 16 und die Ventilvorrichtung 24 in eine aus dem Wäschepflegegerät 10 führende Leitung 30 geleitet wird. Das Kondensat kann folglich mittels der Ventilvorrichtung 24 aus dem Wäschepflegegerät hinaus geleitet werden. Das Kondensat 13, welches sich in dem Kondensatbehälter 14 befindet, kann über ein Ventil 20, insbesondere ein 2-Wege-Ventil, von dem Kondensatbehälter 14 in die Ventilvorrichtung 22 strömen. Ausgehend von der Ventilvorrichtung 22 kann das Kondensat 13 über verschiedene Leitungen 25 zu unterschiedlichen Bauteilen 26, 28 geleitet werden, wobei jede Leitung 25 einen Spülweg angibt, welcher ggf. mit eine Ventilvorrichtung in weitere Spülwege (nicht dargestellt) verzweigt ist.

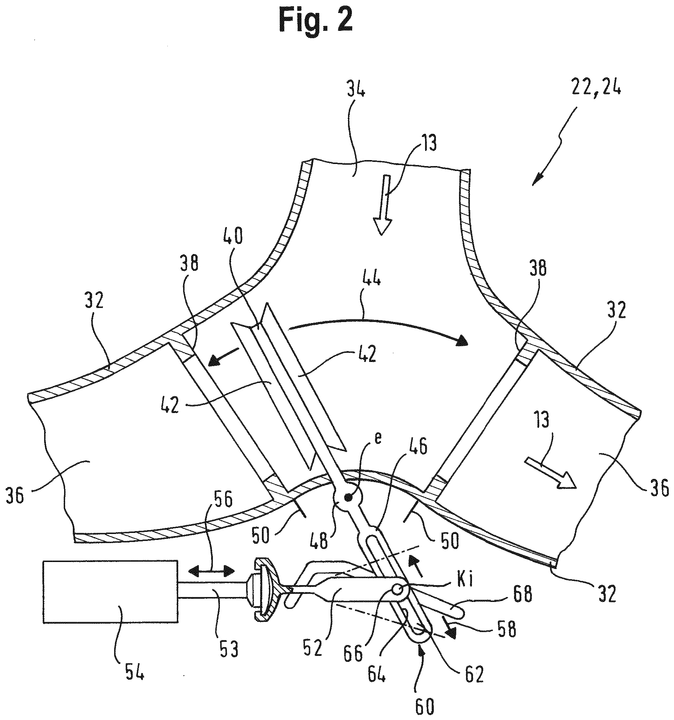

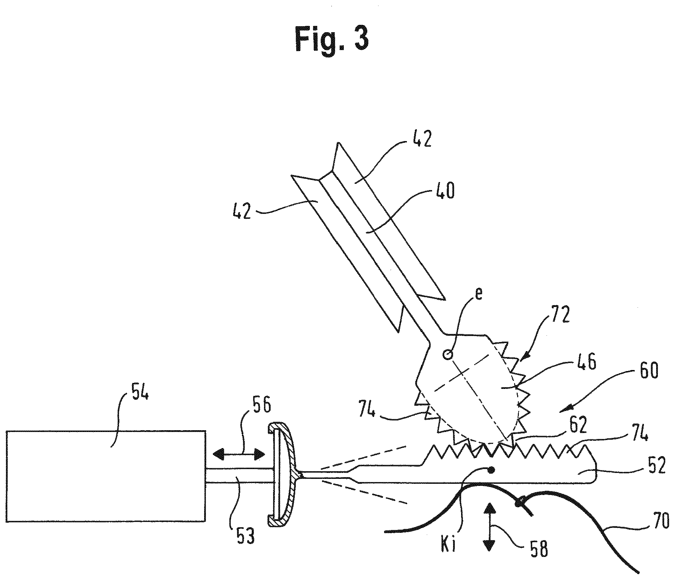

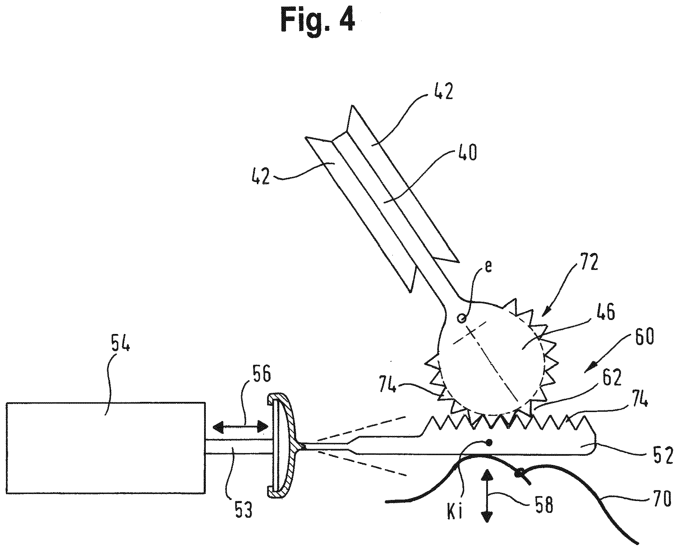

Figur 2 zeigt eine erfindungsgemäße erste Ausführungsform, Figur 3 eine zweite Ausführungsform und Figur 4 eine dritte Ausführungsform einer Ventilvorrichtung 22, 24. Zunächst werden die Gemeinsamkeiten der drei Ausführungsformen beschrieben. Anschließend wird auf die Unterschiede der drei Ausführungsformen in Detail eingegangen.

Die Ventilvorrichtung 22, 24 umfasst ein Gehäuse 32 welches einen Zulauf 34, d.h. eine Zulaufleitung, und zwei Abläufe 36, d.h. Ablaufleitungen, aufweist, durch welche das Kondensat 13 strömen kann. In dem Gehäuse 32, insbesondere nahe den Abläufen 36 ist jeweils ein Dichtungssitz 38 angeordnet. Jeder Dichtungssitz 38 ist dazu ausgebildet eine Klappe 40, insbesondere eine Dichtung 42 der Klappe 40, zum Versperren des entsprechenden Ablaufes 36 zu empfangen. Die Klappe 40 kann dazu wahlweise in beide Richtungen auf die Dichtungssitze 38 zubewegt werden. Die Bewegung der Klappe 40 in wahlweise beide Richtungen wird in Figur 2 durch den Doppelpfeil 44 angedeutet. Um eine solche Bewegung der Klappe 40 zu ermöglichen, ist die Klappe 40 mit einem Hebelarm 46 verbunden. An dem Hebelarm 46 ist ein Drehabschnitt 48 angeordnet, an dem ein Drehpunkt e festgelegt ist. Durch den Drehabschnitt 48, insbesondere durch den Drehpunkt e, führt eine fiktive Drehachse, welche insbesondere aus der Zeichnung empor ragt und damit nicht dargestellt ist. Der Drehpunkt e bzw. die Drehachse sind an dem Gehäuse 32 in einem Übergangsbereich 50 zwischen den Abläufen 36, insbesondere zwischen den Dichtsitzen 38, festgelegt. Der Drehabschnitt 48 kann sich dabei in einigen Ausführungsformen entlang einer äußeren Kontur des Gehäuses 32 in dem Übergangsbereich bewegen, in anderen ist er am Gehäuse festgelegt. Die Festlegung des Drehpunktes ist vorliegend als eine Festlegung an dem Gehäuse 32 in dem Übergangsbereich 50 zu verstehen.

Der Hebelarm 46 steht in Verbindung mit einem Stellelement 52. Das Stellelement 52 ist mit einem Aktor 54 verbunden. Der Aktor 54 ist vorzugsweise als linearer Aktor 54 ausgebildet. Der Aktor 54 ist wie in den Figuren 2 bis 4 dargestellt über ein Gelenk 53 mit dem Stellelement 52 verbunden. Es ist jedoch auch denkbar, dass der Aktor 54 starr mit dem Stellelement 52 verbunden ist (nicht dargestellt). Der Aktor 54 kann einen Antrieb (nicht dargestellt) umfassen oder mit einem solchen verbunden sein. Ferner kann der Aktor 54 als Thermoaktor ausgebildet sein. Der Aktor 54 kann, wie durch den Doppelpfeil 56 in den Figuren 2 bis 4 angedeutet, eine lineare Bewegung ausführen. Eine solche lineare Bewegung gemäß dem Doppelpfeil 56 das Aktors 54 wird auf eine Bewegung des Stellelements 52 übertragen. Das Stellelement 52 weist einen Kraftangriffspunkt $k_i$ auf. An dem Kraftangriffspunkt $k_i$ ist das Stellelement 52 mit dem Hebelarm 46 verbunden oder ist mit dem Hebelarm 46 in Eingriff, so dass die Bewegung von dem Stellelement auf den Hebelarm 46 übertragen werden kann, insbesondere entlang einer Führung 60. Die Übertragung der Bewegung erfolgt in einer Richtung, welche mit der linearen Bewegung gemäß dem Doppelpfeil 56 einen Winkel bis zu 90° einschließt. Dies bedeutet, dass die lineare Bewegung gemäß dem Doppelpfeil 56 in eine im Wesentlichen quer gerichtete Bewegung übersetzt wird, welche gemäß dem Doppelpfeil 58 angedeutet ist. Die Bewegung gemäß dem Doppelpfeil 58 kann in zwei entgegengesetzt Richtungen erfolgen, wobei die Richtung gemäß Doppelpfeil 58 von der ausgeführten Bewegung des Stellelementes 52 in eine Richtung gemäß dem Doppelpfeil 56 abhängig ist. Bei einer Bewegung gemäß dem Doppelpfeil 58 wird der Abstand zwischen dem Kraftangriffspunkt $k_i$ und dem Drehpunkt e verändert.

Jedenfalls wird die Bewegung des Stellelementes 52 zunächst auf den Hebelarm 46 übertragen, wodurch die Klappe 40 eine Bewegung ausführt. Die Bewegung der Klappe 40 zwischen den Dichtsitzen 38 der beiden Abläufe 36 resultiert in einer Schwenkbewegung gemäß Doppelpfeil 44. Die Schwenkbewegung gemäß Doppelpfeil 44 weist eine Komponente parallel zur Bewegung gemäß Doppelpfeil 56 und eine Komponente parallel zur Bewegung gemäß Doppelpfeil 58 auf. Um eine solche Kaskade von Kraft- bzw. Bewegungsübertragungen sicher zu stellen, weist die Ventilvorrichtung 22, 24 die Führung 60 auf. Die Führung 60 ist durch ein Zusammenwirken zwischen dem Stellelement 52 und einem Lager 62, das an dem Hebelarm 46 ausgebildet ist, definiert. Das Stellelement 52 ist dazu ausgebildet in das Lager 62, welches gemäß den unterschiedlichen Ausführungsformen entsprechend komplementär ausgebildet ist, einzugreifen.

Figur 2 zeigt die erste Ausführungsform der Ventilvorrichtung 22, 24. Gemäß dieser ersten Ausführungsform weist der Hebelarm 46 als Lager 62 eine Durchgangsöffnung 64, insbesondere in Form eines Langlochs, auf. An dem Stellelement 52 ist ein Stift 66 angeordnet, so dass der Stift 66 durch die Durchgangsöffnung 64 hindurch in ein Führungselement 68 eingreift. Der Stift 66 ist entlang dem Führungselement 68 bewegbar. Das Führungselement 68 weist eine nicht lineare, gebogene Form auf. Durch das Eingreifen des Stiftes 66 des Stellelementes 52 durch die Durchgangsöffnung 64 hindurch in das Führungselement 68 gleitet das Stellelement 52 entlang der Durchgangsöffnung 64 in den Richtungen gemäß dem Doppelpfeil 58. Das Führungselement 68 gibt dabei durch seine Form bzw. durch die Stellung des Stiftes 66 in dem Führungselement 68 die Richtung und Position der Bewegung gemäß dem Doppelpfeil 58 vor. Dies bedeutet, dass durch die Führung 60 der Abstand zwischen dem Drehpunkt $e$ und dem Kraftangriffspunkt $k_i$ verändert werden kann. Die Veränderung des Abstandes ist dabei abhängig von der Länge des Langloches, sowie von der Kontur des Führungselementes 68, welches z. B. als eine Nut oder ein Steg, z. B. am Gehäuse, ausgebildet ist.

Das Führungselement 68 hat bevorzugt eine derartige Kontur, dass der Abstand des Kraftangriffspunktes zur Drehachse in Abhängigkeit von der Stellposition der Ventilklappe verändert wird und dadurch eine bedarfsgerechte Anpassung von Stellgeschwindigkeit und Stellkraft bewirkt wird.

Beispielsweise steigt mit zunehmender Entfernung des Kraftangriffspunktes $k_i$ vom Drehpunkt $e$ die Kraft an der Kante der Ventilklappe 40 an, während die Bahngeschwindigkeit dort abnimmt. Mit zunehmender Annäherung des Kraftangriffspunktes $k_i$ an den Drehpunkt $e$ steigt die Bahngeschwindigkeit an der Kante der Ventilklappe 40, während die Kraft dort geringer wird.

Für ein sicheres Erreichen der Endposition der Ventilklappe 40 ist es sinnvoll, diese mit größerer Kraft in den Ventilsitz 38 zu drücken. Daher wird durch den Verlauf des Führungselementes 68 bzw. der Führungskontur, wenn sich die Ventilklappe 40 in der Nähe der Dichtsitze 38 der Endpositionen befindet, der Kraftangriffspunkt $k_i$ in vergleichsweise großem Abstand zum Drehpunkt $e$ verschoben. Der Weg zwischen den Endpositionen der Ventilklappe 40 soll dagegen vergleichsweise schnell durchfahren werden, um die Zeit für das Auftreten etwaiger Strömungsgeräusche z. B. durch Druckunterschiede zwischen den Ventilanschlüssen 36 kurz zu halten; daher wird der Kraftangriffspunkt $k_i$ mittels des Führungselementes 68 vergleichsweise weit nach innen (in Richtung Kraftangriffspunkt $k_i$) verschoben. Durch den stellwegabhängig einstellbaren Abstand des Krafteinwirkpunktes $k_i$ vom Drehpunkt $e$ lassen sich sowohl die Stellgeschwindigkeit als auch Stellkraft den Erfordernissen, die von der Stellposition der Ventilklappe 40 abhängig sind, anpassen.

Figur 3 zeigt die zweite Ausführungsform der Ventilvorrichtung 22, 24. Im Unterschied zur ersten Ausführungsform gemäß Figur 2 umfasst die zweite Ausführungsform einen Hebelarm 46 in Form eines nicht runden Zahnrades 72. Das Zahnrad 72 ist gemäß Figur 3 in Form einer Eichel ausgebildet. Das nicht runde Zahnrad 72 kann sich durch seine Zähne 74 entlang dem Stellelement 52, welches ebenfalls Zähne 74 aufweist, bewegen. Die Zähne 74 des Zahnrades 72 gelangen in Eingriff mit den Zähnen 74 des Stellelementes, wodurch eine Führung 60 vorgegeben ist. Das Stellelement 52 ist ferner mit einem Federelement 70 in Kontakt. Das Federelement 70 dient bei dieser Ausführungsform als Rückstellelement, um einen Kontakt zwischen dem Stellelement 52 und dem Zahnrad 72 bei einer Bewegung gemäß dem Doppelpfeil 58 durchgängig sicher zu stellen.

Figur 4 zeigt die dritte Ausführungsform der Ventilvorrichtung 22, 24. Im Unterschied zur zweiten Ausführungsform gemäß Figur 3 umfasst die dritte Ausführungsform einen Hebelarm 46 in Form eines runden Zahnrades 72. Das Zahnrad 72 ist gemäß Figur 4 in Form eines Kreises ausgebildet, wobei der Drehpunkt $e$ nichtzentrisch an dem Hebelarm 46 angeordnet ist. Der Hebelarm 46 ist gemäß der dritten Ausführungsform als Exzenter-Zahnrad 72 ausgebildet. Das runde exzentrische Zahnrad 72 kann sich durch seine Zähne 74 entlang dem Stellelement 52, welches ebenfalls Zähne 74 aufweist, bewegen. Die Zähne 74 des Zahnrades 72 gelangen in Eingriff mit den Zähnen 74 des Stellelementes, wodurch eine Führung 60 vorgegeben ist. Das Stellelement 52 ist ferner mit dem Federelement 70 in Kontakt. Das Federelement 70 dient auch bei dieser Ausführungsform als Rückstellelement, um einen Kontakt zwischen dem Stellelement 52 und dem Zahnrad 72 bei einer Bewegung gemäß dem Doppelpfeil 58 durchgängig sicher zu stellen.

**Bezugszeichenliste**

| 10 | Wäschepflegegerät |
| 12 | Bodengruppe |
| 13 | Kondensat |
| 14 | Kondensatbehälter |
| 16 | Ablaufleitung |
| 18 | Pumpe |
| 20 | Ventil |
| 22 | Ventilvorrichtung |
| 24 | Ventilvorrichtung |
| 26 | Bauteil |
| 28 | Bauteil |
| 30 | Leitung |
| 32 | Gehäuse |
| 34 | Zulauf |
| 36 | Ablauf |
| 38 | Dichtungssitz |

40 Klappe
42 Dichtung
44 Doppelpfeil
46 Hebelarm
48 Drehabschnitt
50 Übergangsbereich
52 Stellelement
53 Gelenk
54 Aktor
56 Doppelpfeil
58 Doppelpfeil
60 Führung
62 Lager
64 Durchgangsöffnung
66 Stift
68 Führungselement
70 Federelement
72 Zahnrad
74 Zahn
$k_i$ Kraftangriffspunkt
e Drehpunkt

## Patentansprüche

1. Ventilvorrichtung (22, 24) zum Leiten eines Kondensats (13) eines Wäschepflegegeräts (10), insbesondere entlang eines ausgewählten Weges, wobei

   - die Ventilvorrichtung (22, 24) einen Zulauf (34) zum Aufnehmen des Kondensats (13) und
   - mindestens einen Ablauf (36) zum Ableiten des Kondensats (13), insbesondere an ein zu reinigendes Bauteil (26, 28), aufweist,
   - wobei der mindestens eine Ablauf (36) mindestens ein Ventil mit einer bewegbaren Klappe (40) aufweist,
   - wobei die Klappe (40) mit einem Hebelarm (46) verbunden ist, auf welchen über einen Kraftangriffspunkt ($k_i$) an dem Hebelarm (46) eine Kraft übertragbar ist, welche über einen Drehpunkt (e) einer Drehachse auf die Klappe (40) übertragbar ist, so dass die Klappe (40) zwischen einem geöffneten und einem geschlossenen Zustand des mindestens einen Ablaufes (36) bewegbar ist, wobei das Ventil über einen Ventilantrieb ansteuerbar ist,
   wobei der Ventilantrieb als ein linearer Aktor (54) ausgestaltet ist, welcher, insbesondere über ein Gelenk (53), mit einem Stellelement (52) verbunden ist,
   wobei das Stellelement (52) am Kraftangriffspunkt ($k_i$) die Kraft und Bewegung des Aktors (54) auf den Hebelarm (46) überträgt, **dadurch gekennzeichnet, dass**
   das Stellelement (52) an einem entlang des Hebelarmes (46) verschiebbaren Kraftangriffspunkt ($k_i$) eingreift,

   wobei eine Führung (60) vorgesehen ist, welche durch ein Eingreifen des Stellelementes (52) an dem Hebelarm (46) entlang einem am Hebelarm (46) festgelegten Lager (62) ausgebildet ist,
   wobei die Führung (60) dazu eingerichtet ist, einen Abstand zwischen dem Kraftangriffspunkt ($k_i$) und dem Drehpunkt (e) zu verändern, so dass eine Anpresskraft und/oder eine Stellgeschwindigkeit der Klappe (40), insbesondere auf eine Ablauföffnung des mindestens einen Ablaufes (36), veränderbar ist,
   wobei das Lager (62) an dem Hebelarm (46) als eine Durchgangsöffnung (64) oder eine Nut ausgebildet ist, in welcher ein Stift (66) des Stellelementes (52) geführt ist, und
   wobei der Stift (66) in ein Führungselement (68) eingreift, welches durch seine Form die Bewegung des Stiftes (66) in der Durchgangsöffnung (64) oder Nut führt.

2. Ventilvorrichtung (22, 24) nach Anspruch 1, **dadurch gekennzeichnet, dass** die Drehachse (e) des mindestens einen Ventils an einem Gehäuse (32) festgelegt ist.

3. Ventilvorrichtung (22, 24) nach einem der Ansprüche 1 oder 2, **dadurch gekennzeichnet, dass** eine Bewegung des Stellelements (52) in eine Bewegung des Hebelarmes (46) entlang der Führung (60) resultiert, bei welcher insbesondere sich der Abstand zwischen dem Kraftangriffspunkt ($k_i$) und dem Drehpunkt (e) ändert.

4. Ventilvorrichtung (22, 24) nach einem der vorhergehenden Ansprüche, **dadurch gekennzeichnet, dass** die Ventilvorrichtung (22, 24) ein oder mehrere Ventile, insbesondere 3-Wege-Ventile, umfasst, um einen Weg zum Leiten des Kondensats (13) wahlweise freizugeben oder zu versperren.

5. Wäschepflegegerät (10), insbesondere ein Trockner oder ein Waschtrockner, mit einer Ventilvorrichtung (22, 24) nach einem der Ansprüche 1 bis 4, wobei ein Kondensat (13) des Wäschepflegegerätes (10) mit der Ventilvorrichtung (22, 24) selektiv zu einer vorgegebenen Position leitbar ist.

6. Verfahren zum Leiten eines Kondensats (13) eines Wäschepflegegeräts (10), insbesondere entlang eines ausgewählten Weges, mit einem Wäschepflegegerät (10) nach Anspruch 5, wobei das Ventil ausgebildet ist, mindestens den einen Ablauf (36) zu versperren, um ein Ableiten des Kondensats (13) durch den mindestens einen Ablauf (36) zu verhindern, wobei das Verfahren die Schritte umfasst:

   - Bewegen des Stellelementes (52) entlang einer Richtung, um an dem Kraftangriffspunkt ($k_i$)

eine Kraft von dem Stellelement (52) auf den Hebelarm (46) zu übertragen,

- Verändern eines Abstandes zwischen dem Kraftangriffspunkt (k$_i$) und dem Drehpunkt (e), welche insbesondere an einem Drehabschnitt (48) angeordnet ist, welcher zwischen dem Hebelarm (46) und der Klappe (40) angeordnet ist, wobei das Verändern des Abstandes durch die Bewegung des Stellelementes (52) entlang der Führung (60) erfolgt, wodurch eine Stellgeschwindigkeit und/oder eine Stellkraft der Klappe (40) des Ventils an ventilstellwegabhängigen Erfordernisse in der Ventilvorrichtung (22, 24) angepasst wird.

## Claims

1. Valve apparatus (22, 24) for conducting a condensate (13) of a laundry care appliance (10), in particular along a selected path, wherein

   - the valve apparatus (22, 24) has an intake (34) for receiving the condensate (13) and
   - at least one drain (36) for draining the condensate (13), in particular to a component (26, 28) to be cleaned,
   - wherein the at least one drain (36) has at least one valve with a movable flap (40),
   - wherein the flap (40) is connected to a lever arm (46), to which a force can be transferred to the lever arm (46) via a force action point (k$_i$) and can be transferred to the flap (40) via a point of rotation (e) of an axis of rotation, so that the flap (40) can be moved between an opened and a closed state of the at least one drain (36), wherein the valve can be actuated via a valve drive,
   wherein the valve drive is embodied as a linear actuator (54),
   which is connected to an actuating element (52), in particular via a joint (53),
   wherein the actuating element (52) transfers the force and movement of the actuator (54) to the lever arm (46) at the force action point (k;),
   **characterised in that**
   the actuating element (52) engages at a force action point (k$_i$) that can be displaced along the lever arm (46),
   wherein a guide (60) is provided, which is embodied by an engagement of the actuating element (52) on the lever arm (46) along a bearing (62) that is fixed on the lever arm (46),
   wherein the guide (60) is configured to alter a spacing between the force action point (k$_i$) and the point of rotation (e) so that it is possible to alter a contact force and/or an actuating speed of the flap (40), in particular at a drain opening of the at least one drain (36),
wherein the bearing (62) on the lever arm (46) is embodied as a through-opening (64) or a groove, in which a pin (66) of the actuating element (52) is guided, and
wherein the pin (66) engages into a guide element (68), which due to its shape guides the movement of the pin (66) in the through-opening (64) or groove.

2. Valve apparatus (22, 24) according to claim 1, **characterised in that** the axis of rotation (e) of the at least one valve is fixed on a housing (32).

3. Valve apparatus (22, 24) according to one of claims 1 or 2, **characterised in that** a movement of the actuating element (52) results in a movement of the lever arm (46) along the guide (60), in which in particular the spacing between the force action point (k$_i$) and the point of rotation (e) changes.

4. Valve apparatus (22, 24) according to one of the preceding claims, **characterised in that** the valve apparatus (22, 24) comprises one or more valves, in particular three-way valves, in order to optionally release or block a path for conducting the condensate (13).

5. Laundry care appliance (10), in particular a dryer or a washer-dryer, with a valve apparatus (22, 24) according to one of claims 1 to 4, wherein a condensate (13) of the laundry care appliance (10) can be conducted to a predefined position on a selective basis using the valve apparatus (22, 24).

6. Method for conducting a condensate (13) of a laundry care appliance (10), in particular along a selected path, with a laundry care appliance (10) according to claim 5, wherein the valve is embodied to block at least the one drain (36), in order to prevent a draining of the condensate (13) through the at least one drain (36), wherein the method comprises the steps:

   - moving the actuating element (52) along a direction, in order to transfer a force from the actuating element (52) to the lever arm (46) at the force action point (k;),
   - altering a spacing between the force action point (k$_i$) and the point of rotation (e), which in particular is arranged on a rotation section (48) that is arranged between the lever arm (46) and the flap (40), wherein the altering of the spacing takes place by way of the movement of the actuating element (52) along the guide (60), whereby an actuating speed and/or an actuating force of the flap (40) of the valve is adapted to requirements, which are dependent upon the valve actuating path, in the valve apparatus (22, 24).

## Revendications

**1.** Dispositif de soupape (22, 24) pour guider un condensat (13) d'un appareil d'entretien du linge (10), en particulier le long d'un trajet sélectionné, dans lequel

- le dispositif de soupape (22, 24) comprend une entrée (34) pour recevoir le condensat (13) et
- au moins une sortie (36) pour évacuer le condensat (13), en particulier au niveau d'un élément à nettoyer (26, 28),
- dans lequel l'au moins une sortie (36) comprend au moins une soupape comportant un clapet mobile (40),
- dans lequel le clapet (40) est relié à un bras de levier (46), sur lequel une force peut être transmise via un point d'application de force ($k_i$) sur le bras de levier (46), laquelle force peut être transmise par un point de pivotement (e) d'un axe de rotation sur le clapet (40), de sorte que le clapet (40) est mobile entre un état ouvert et un état fermé de l'au moins une sortie (36), dans lequel la soupape est actionnable par le biais d'un actionneur de soupape,
dans lequel l'actionneur de soupape est configuré sous forme d'un actionneur linéaire (54), qui est relié à un élément de réglage (52) en particulier par l'intermédiaire d'une articulation (53),
dans lequel l'élément de réglage (52) transmet la force et le mouvement de l'actionneur (54), au niveau du point d'application de force ($k_i$), sur le bras de levier (46),
**caractérisé en ce que** l'élément de réglage (52) s'engage au niveau d'un point d'application de force ($k_i$) coulissant le long du bras de levier (46), dans lequel un guidage (60) est prévu, qui est formé par une mise en prise de l'élément de réglage (52) sur le bras de levier (46) le long d'un palier (62) établi sur le bras de levier (46),
dans lequel le guidage (60) est configuré pour faire varier une distance entre le point d'application de force ($k_i$) et le point de pivotement (e), de sorte qu'une force d'appui et/ou une vitesse de réglage du clapet (40), en particulier sur un orifice de sortie de l'au moins une sortie (36) puisse être modifiée,
dans lequel le palier (62) sur le bras de levier (46) est configuré sous forme d'un orifice de passage (64) ou d'une rainure, dans lequel(laquelle) une tige (66) de l'élément de réglage (52) est guidée, et
dans lequel la tige (66) s'engage dans un élément de guidage (68), qui guide par sa forme le déplacement de la tige (66) dans l'orifice de passage (64) ou la rainure.

**2.** Dispositif de soupape (22, 24) selon la revendication 1, **caractérisé en ce que** l'axe de rotation (e) de l'au moins une soupape est établi sur un boîtier (32).

**3.** Dispositif de soupape (22, 24) selon l'une des revendications 1 ou 2, **caractérisé en ce qu'**un déplacement de l'élément de réglage (52) entraîne un déplacement du bras de levier (46) le long du guidage (60), au cours duquel en particulier la distance entre le point d'application de force ($k_i$) et le point de pivotement (e) varie.

**4.** Dispositif de soupape (22, 24) selon l'une des revendications précédentes, **caractérisé en ce que** le dispositif de soupape (22, 24) comprend une ou plusieurs soupapes, en particulier des soupapes à trois voies, permettant de libérer ou de barrer sélectivement un trajet de guidage du condensat (13).

**5.** Appareil d'entretien du linge (10), en particulier sèche-linge ou lave-linge séchant, comprenant un dispositif de soupape (22, 24) selon l'une des revendications 1 à 4, dans lequel un condensat (13) de l'appareil d'entretien du linge (10) peut être guidé sélectivement vers une position prédéterminée à l'aide du dispositif de soupape (22, 24).

**6.** Procédé de guidage d'un condensat (13) d'un appareil d'entretien du linge (10), en particulier le long d'un trajet sélectionné, en utilisant un appareil d'entretien du linge selon la revendication 5, dans lequel la soupape est configurée pour bloquer au moins l'une sortie (36), afin d'empêcher une évacuation du condensat (13) à travers l'au moins une sortie (36), dans lequel le procédé comprend les étapes suivantes :

- déplacement de l'élément de réglage (52) le long d'une direction, pour transmettre, au niveau du point d'application de force ($k_i$) une force de l'élément de réglage (52) sur le bras de levier (46),
- modification d'une distance entre le point d'application de force ($k_i$) et le point de pivotement (e), qui est disposé en particulier sur une section de pivotement (48), disposée entre le bras de levier (46) et le clapet (40), dans lequel la modification de la distance est effectuée par le déplacement de l'élément de réglage (52) le long du guidage (60), au moyen de quoi une vitesse de réglage et/ou une force de réglage du clapet (40) de la soupape est adaptée aux exigences en fonction de la course de réglage de soupape dans le dispositif de soupape (22, 24).

# Fig. 1

# Fig. 2

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013217468 A1
- CN 106480683 A
- DE 102005051304 A1
- DE 2702639 A1
- EP 0054448 A1
- FR 2443231 A2